(19) Europäisches Patentamt / European Patent Office / Office européen des brevets

(11) **EP 4 407 254 A1**

(12) **EUROPEAN PATENT APPLICATION**
published in accordance with Art. 153(4) EPC

(43) Date of publication:
**31.07.2024 Bulletin 2024/31**

(21) Application number: **22878312.2**

(22) Date of filing: **16.09.2022**

(51) International Patent Classification (IPC):
**F24V 30/00** (2018.01)     **H05B 3/02** (2006.01)

(52) Cooperative Patent Classification (CPC):
**F24V 30/00; H05B 3/02;** Y02A 30/27

(86) International application number:
**PCT/JP2022/034839**

(87) International publication number:
**WO 2023/058441 (13.04.2023 Gazette 2023/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2021 JP 2021163715**

(71) Applicant: **Clean Planet Inc.**
**Minato-ku**
**Tokyo 105-0022 (JP)**

(72) Inventors:
- **SATO Ryoki**
  **Tokyo 105-0022 (JP)**
- **IWAMURA Yasuhiro**
  **Sendai-shi, Miyagi 980-8577 (JP)**
- **ITO Takehiko**
  **Tokyo 105-0022 (JP)**
- **YOSHINO Hideki**
  **Tokyo 105-0022 (JP)**

(74) Representative: **Bandpay & Greuter**
**11 rue Christophe Colomb**
**75008 Paris (FR)**

(54) **HEAT GENERATION DEVICE**

(57)     Provided is a heat generating device that can improve a ratio of an amount of heat generated by a heat generating element to electric power input to a heater. The heat generating device includes a pair of heaters 6 provided with an interval therebetween; and a plurality of heat generating elements 5 that are capable of occluding hydrogen and generating heat using a heat generating reaction by quantum diffusion of the hydrogen caused by heat of the pair of heaters 6, in which the plurality of heat generating elements 5 are arranged with an interval between each other and are arranged between the pair of heaters 6.

FIG. 3

**Description**

Technical Field

The present invention relates to a heat generating device.

Background of Art

It has been proposed to use a hydrogen storage alloy such as a palladium alloy to occlude hydrogen, so as to obtain thermal energy by utilizing a heat generating reaction that occurs during quantum diffusion of hydrogen. Patent Literature 1 discloses that a heat generating element that occludes hydrogen is heated by a heater and evacuated to cause quantum diffusion of hydrogen, thereby generating excess heat higher than a heating temperature by the heater.

Citation List

Patent Literature

Patent Literature 1: JP2019-168221A

Summary of Invention

Technical Problem

As disclosed in Patent Literature 1, in a device that generates excess heat by heating a heat generating element with a heater, it is required to improve a ratio (COP) of an amount of heat generated by the heat generating element to electric power input to the heater.
As a method for heating the heat generating element with the heater, there is a so-called heater/heat generating element alternating arrangement method in which a plurality of heaters and a plurality of heat generating elements are arranged alternately and each heat generating element is heated by the heaters on both sides. In the heater/heat generating element alternating arrangement method, when the number of the heat generating elements is n, the number of the heaters is n + 1, and a ratio Rn of the number of the heaters to the number of the heat generating elements satisfies Rn = (n + 1)/n. When n, which is the number of the heat generating elements, is increased, Rn becomes 1. That is, one heater is always required for one heat generating element. Therefore, in the heater/heat generating element alternating arrangement method, it is difficult to improve the ratio (COP) of the amount of heat generated by the heat generating element to the electric power input to the heater.
Accordingly, an object of the present invention is to provide a heat generating device that can improve the ratio of the amount of heat generated by the heat generating element to the electric power input to the heater.

Solution to Problem

The heat generating device according to the present invention includes a pair of heaters provided with an interval therebetween; and a plurality of heat generating elements that are capable of occluding hydrogen and generating heat using a heat generating reaction by quantum diffusion of the hydrogen caused by heat of the pair of heaters, in which the plurality of heat generating elements are arranged with an interval between each other and are arranged between the pair of heaters.

Advantageous Effects of Invention

According to the present invention, it is possible to improve the ratio of the amount of heat generated by the heat generating element to the electric power input to the heater.

Brief Description of Drawings

Fig. 1 is a schematic diagram showing a configuration of a heat generating device according to the present invention. Fig. 2A is a cross-sectional view showing a cross-sectional configuration of a heat generating element. Fig. 2B is a schematic diagram for explaining excess heat generated in a multilayer film.

Fig. 3 is an enlarged cross-sectional view of a heat generating structure shown in Fig. 1.

Fig. 4 is a schematic diagram showing the adjacent heat generating elements.

Fig. 5 is a graph showing a relation between an interval between the adjacent heat generating elements and a radiation heat loss coefficient.

Fig. 6 is an explanatory diagram for explaining a heat generating element of a first modification having a first layer, a second layer, and a third layer.

Fig. 7 is an explanatory diagram for explaining a heat generating element of a second modification having a first layer, a second layer, a third layer, and a fourth layer.

Description of Embodiments

Hereinafter, an embodiment of the present invention will be described in detail based on the drawings.

(1) Overall Configuration of Heat Generating Device of Present Invention

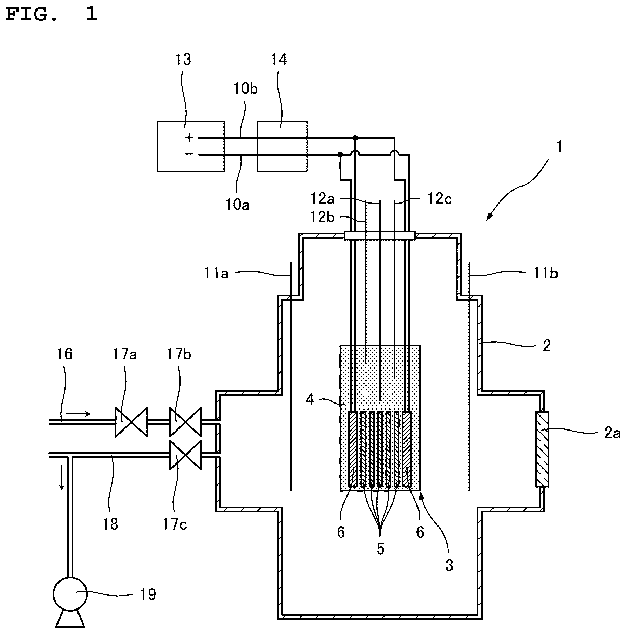

Fig. 1 is a schematic diagram showing a configuration of a heat generating device 1 of the present invention. As shown in Fig. 1, the heat generating device 1 includes a container 2 into which a hydrogen-based gas that contributes to heat generation is introduced, and a heat generating structure 3 provided inside the container 2. In the heat generating device 1, after the hydrogen-based gas is introduced into the container 2, a heat generating element 5 (described later) in the heat generating structure 3 is heated by a heater 6, so that the heat generating element 5 generates excess heat exceeding a heating temperature. As the hydrogen-based gas introduced into the container 2, a deuterium gas and/or a natural hydrogen gas can be used. Note that the natural hydrogen gas refers to a hydrogen-based gas containing 99.985% or more of protium gas.

The container 2 is made of, for example, stainless steel (SUS306 or SUS316), and an interior of the container 2 can be made to a closed space. The container 2 includes a window 2a formed of a transparent member such as Kovar glass, so that an operator can directly visually check the inside of the container 2 while maintaining a sealed state of the container 2. Note that SUS306 and SUS316 are stainless steels specified by the Japanese Industrial Standards (JIS).

The container 2 is connected with a hydrogen-based gas introduction path 16, and a hydrogen-based gas is introduced into the container 2 through the hydrogen-based gas introduction path 16. When a certain amount of the hydrogen-based gas is stored inside the container 2, adjustment valves 17a and 17b provided in the hydrogen-based gas introduction path 16 are closed, and introduction of the hydrogen-based gas from the hydrogen-based gas introduction path 16 to the inside of the container 2 is stopped.

The container 2 is connected to a vacuum evacuation unit 19 via an evacuation path 18. The vacuum evacuation unit 19 includes, for example, a dry pump. By discharging the gas inside the container 2 to the outside of the container 2 through the evacuation path 18, vacuum evacuation, pressure adjustment and the like can be performed. The evacuation path 18 is provided with an adjustment valve 17c, and when the adjustment valve 17c is closed, the evacuation of gas from the container 2 is stopped.

The container 2 is provided with a plurality of temperature measurement units 11a, 11b, 12a, 12b, and 12c. In this embodiment, the temperature measurement units 11a and 11b are provided along an inner wall of the container 2, and can measure a temperature of the inner wall. The temperature measurement units 12a, 12b, and 12c are provided on a holder 4 that holds the heat generating element 5 in the heat generating structure 3, and can measure a temperature of the holder 4. The temperature measurement units 12a, 12b, and 12c have different lengths, and can measure temperatures of portions of the holder 4. The portions are at, for example, a lower stage near the heat generating element 5, an upper stage away from the heat generating element 5, and a middle stage between the lower stage and the upper stage.

The heater 6 is, for example, a plate-shaped ceramic heater. The heater 6 is connected to an external heating power supply 13 via wirings 10a and 10b, and heats the heat generating element 5 to a predetermined temperature. The heater 6 has a built-in thermocouple, and can measure a temperature using the thermocouple. An ammeter-voltmeter 14 is provided on the wirings 10a and 10b, and an input current and an input electric power applied to the heater 6 are measured by the ammeter-voltmeter 14. The heating temperature when heating the heat generating element 5 with the heater 6 varies depending on a type of a hydrogen storage metal that constitutes the heat generating element 5, but is at least 300°C or higher, preferably 500°C or higher, and more preferably 600°C or higher.

(2) Regarding Heat Generating Element

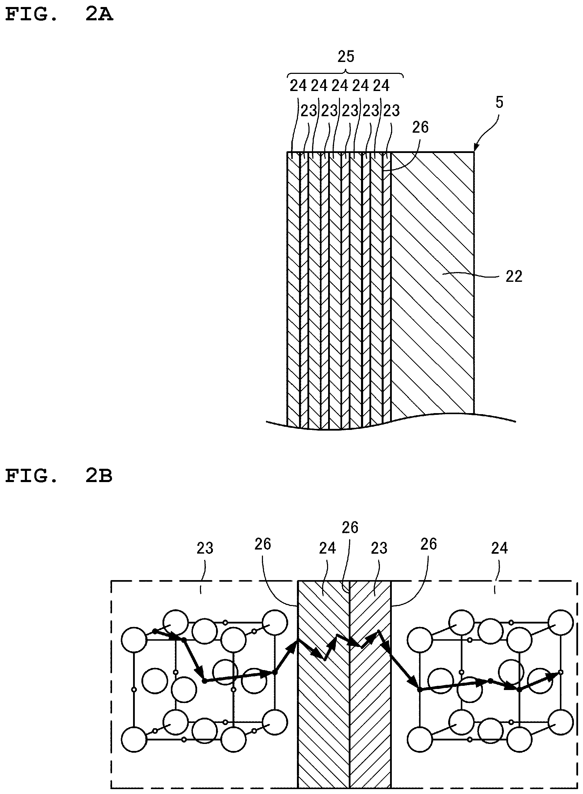

Next, the heat generating element 5 will be explained with reference to Fig. 2. Fig. 2A is a cross-sectional view showing a cross-sectional configuration of the heat generating element 5, and Fig. 2B is a schematic diagram for explaining the excess heat generated in a multilayer film 25.

As shown in Fig. 2A, the heat generating element 5 includes a base 22 made of a hydrogen storage metal, a hydrogen storage alloy, or a proton conductor, and a multilayer film 25 formed on a surface of the base 22. The multilayer film 25 is supported by the base 22. Ni, Pd, V, Nb, Ta, and Ti can be used as the hydrogen storage metal that makes the base 22, and $LaNi_5$, $CaCu_5$, $MgZn_2$, $ZrNi_2$, $ZrCr_2$ TiFe, TiCo, $Mg_2Ni$, and $Mg_2Cu$ can be used as the hydrogen storage alloy that makes the base 22. Examples of the proton conductor include $BaCeO_3$-based (for example, $Ba(Ce_{0.95}Y_{0.05})O_{3-\delta}$), $SrCeO_3$-based (for example $Sr(Ce_{0.95}Y_{0.05})O_{3-\delta}$), $CaZrO_3$-based (for example, $CaZr_{0.95}Y_{0.05}O_{3-\alpha}$), $SrZrO_3$-based (for example, $SrZr_{0.9}Y_{0.1}O_{3-\alpha}$) proton conductors, $\beta Al_2O_3$, and $\beta Ga_2O_3$ proton conductors.

The multilayer film 25 includes a first layer 23 made of a hydrogen storage metal or a hydrogen storage alloy, and a second layer 24 made of a hydrogen storage metal or a hydrogen storage alloy different from the first layer 23, or a ceramic. The first layer 23 and the second layer 24 are alternately stacked, and a heterogeneous material interface 26 is formed between the first layer 23 and the second layer 24.

The first layer 23 is preferably made of, for example, any one of Ni, Pd, Cu, Mn, Cr, Fe, Mg, Co, and alloys thereof. The alloy of the first layer 23 may be an alloy in which an additional element is added to Ni, Pd, Cu, Mn, Cr, Fe, Mg, and Co, and an alloy containing two or more of Co Ni, Pd, Cu, Mn, Cr, Fe, Mg, and Co is particularly preferable.

The second layer 24 is preferably made of, for example, any one of Ni, Pd, Cu, Mn, Cr, Fe, Mg, Co, alloys thereof, and SiC. The alloy of the second layer 24 may be an alloy in which an additional element is added to Ni, Pd, Cu, Mn, Cr, Fe, Mg, and Co, and an alloy containing two or more of Co Ni, Pd, Cu, Mn, Cr, Fe, Mg, and Co is particularly preferable.

As a combination of the first layer 23 and the second layer 24, when types of elements in the combination are expressed as "first layer 23-second layer 24", it is preferably Pd-Ni, Ni-Cu, Ni-Cr, Ni-Fe, Ni-Mg, and Ni-Co. When the second layer 24 is made of a ceramic, it is preferable that "first layer 23-second layer 24" is Ni-SiC.

Since it is preferable that the first layer 23 and the second layer 24 maintain nanostructures that do not exhibit bulk properties, a thickness of the first layer 23 and the second layer 24 is preferably less than 1000 nm. Furthermore, it is more preferable that the thickness of the first layer 23 and the second layer 24 is less than 500 nm so as to maintain nanostructures that completely do not exhibit bulk properties.

The heat generating element 5 has a configuration in which the first layer 23 and the second layer 24 have a nano-sized (less than 1000 nm) film thickness, and the first layer 23 and the second layer 24 are alternately formed, and therefore, hydrogen (hydrogen atoms) can pass through each heterogeneous material interface 26 between the first layer 23 and the second layer 24.

Fig. 2B is a schematic diagram showing that the first layer 23 and the second layer 24 are hydrogen storage metals with a face-centered cubic structure, and showing how hydrogen in a metal lattice in the first layer 23 passes through the heterogeneous material interface 26 and moves into a metal lattice in the second layer 24.

When the hydrogen-based gas is introduced into the container 2 (see Fig. 1), hydrogen (deuterium or protium) is occluded by the multilayer film 25 and the base 22 of the heat generating element 5. Even when the introduction of the hydrogen-based gas into the container 2 is stopped, the multilayer film 25 and the base 22 maintain a state in which hydrogen is occluded. When heating of the heat generating element 5 by the heater 6 (see Fig. 1) is started, the hydrogen occluded in the multilayer film 25 and the base 22 is released, and quantum diffusion occurs during hopping within the multilayer film 25.

It is known that hydrogen is light and hops in a manner of quantum diffusion in hydrogen-occupied sites (octahedral sites or tetrahedral sites) of substance A and substance B. By heating the heat generating element 5 by the heater 6 in a vacuum state, hydrogen passes through the heterogeneous material interface 26 between the first layer 23 and the second layer 24 by quantum diffusion, or hydrogen diffuses in the heterogeneous material interface 26, so that excess heat equal to or higher than the heating temperature is generated in the heat generating element 5. In other words, the heat generating element 5 generates heat using a heat generating reaction that occurs during quantum diffusion of hydrogen.

In the example shown in Fig. 2A and Fig. 2B, a plurality of first layers 23 and a plurality of second layers 24 are alternately stacked, and the multilayer film 25 includes two or more heterogeneous material interfaces 26. The present invention is not limited thereto, and at least one first layer 23 and at least one second layer 24 may be provided, and there may be one heterogeneous material interface 26. In other words, the multilayer film 25 only needs to have one or more heterogeneous material interfaces 26.

The heat generating element 5 shown in Fig. 2A and Fig. 2B can be manufactured as follows. First, the plate-shaped base 22 is prepared, and the hydrogen storage metal or hydrogen storage alloy that makes the first layer 23 or the second layer 24 is made into a vapor phase using an evaporation device, and then the first layer 23 and the second layer 24 are alternately formed as a film on the base 22 by aggregation or adsorption. In this way, the heat generating element 5 can be manufactured.

As the evaporation device for forming the first layer 23 and the second layer 24, a physical evaporation device that vaporizes a hydrogen storage metal or a hydrogen storage alloy by a physical method can be used. The physical vapor deposition device is preferably a sputtering device that deposits the hydrogen storage metal or the hydrogen storage alloy on the base 22 by sputtering, a vacuum evaporation device, or a chemical vapor deposition (CVD) device. The hydrogen storage metal or the hydrogen storage alloy may be deposited on the base 22 by electroplating, and the first layer 23 and the second layer 24 may be formed as a film alternately.

Note that it is preferable that the first layer 23 and the second layer 24 are continuously formed as a film in a vacuum state when manufacturing the heat generating element 5, so that no natural oxide film but only the heterogeneous material interface 26 is formed between the first layer 23 and the second layer 24.

(3) Regarding Heat Generating Structure

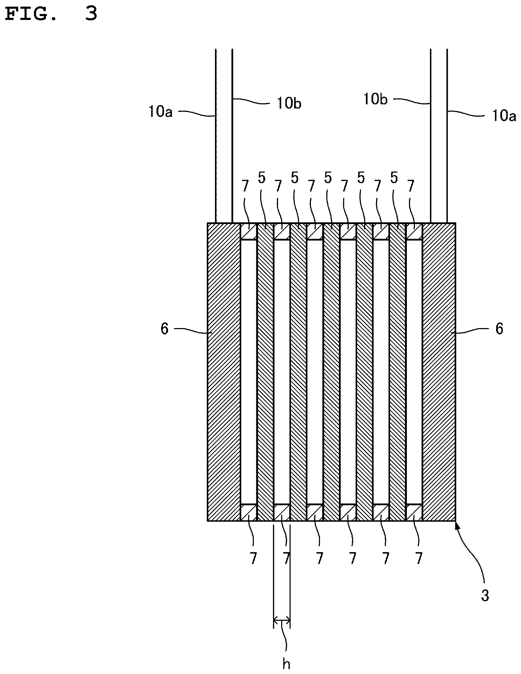

Fig. 3 is an enlarged cross-sectional view of the heat generating structure 3. In Fig. 3, illustration of the holder 4 is omitted. As shown in Fig. 3, a pair of heaters 6 are provided with an interval therebetween, and a plurality of heat generating elements 5 are provided between the pair of heaters 6. In the example shown in Figs. 1 and 3, the heat generating structure 3 includes five heat generating elements 5, but the number of the heat generating elements 5 may be two or more. A spacer 7 is provided between the adjacent heat generating elements 5.

Here, as one index in consideration of heating efficiency of the heaters 6, a ratio Rn of the number of the heat generating elements 5 to the number of the heaters 6 may be used. When the number of the heat generating elements 5 is n and the number of the heaters 6 is m, the ratio Rn of the number of the heaters 6 to the number of the heat generating elements 5 satisfies Rn = m/n.

In a so-called heater/heat generating element alternating arrangement method in the related art, the plurality of the heaters 6 and the plurality of the heat generating elements 5 are arranged alternately and each heat generating element 5 is heated by the heaters 6 on both sides, and the number m of the heaters 6 is n + 1, and the ratio Rn of the number of the heaters 6 to the number of the heat generating elements 5 satisfies Rn = (n + 1)/n. When the number n of the heat generating elements 5 is increased, the ratio Rn becomes extremely close to "1". That is, one heater 6 is always required for one heat generating element 5. Therefore, in the heater/heat generating element alternating arrangement method, it is difficult to improve the ratio (COP) of the amount of heat generated by the heat generating elements 5 to the electric power input to the heaters 6.

In the present embodiment, since the plurality of heat generating elements 5 are provided between the pair of heaters 6, the number m of the heaters 6 is "2", and the ratio Rn of the number of the heaters 6 to the number of the heat generating elements 5 satisfies Rn = 2/n. When the number n of the heat generating elements 5 is increased, the ratio Rn becomes extremely close to "0". In other words, the electric power input to the heaters 6 can be made extremely small relative to the amount of heat generated by the heat generating elements 5, and an improvement in the ratio (COP) of the amount of heat generated by the heat generating elements 5 to the electric power input to the heaters 6 can be expected.

In the present embodiment, if an interval h between the adjacent heat generating elements 5 is too small, the gas between the adjacent heat generating elements 5 will not be exhausted even when the vacuum evacuation unit 19 is used, and the hydrogen-based gas introduced into the container 2 through the hydrogen-based gas introduction path 16 does not circulate between the adjacent heat generating elements 5. As a result, the heat generating element 5 may not be able to occlude a sufficient amount of hydrogen, and the expected COP increasing effect may not be obtained. If the interval h between the adjacent heat generating elements 5 is too large, the amount of heat radiated from a heat generating surface of the heat generating elements 5 to the surrounding increases. As a result, radiation heat loss increases, and the expected COP increasing effect may not be obtained. Therefore, the interval h at which the COP increasing effect can be expected is to be acquired.

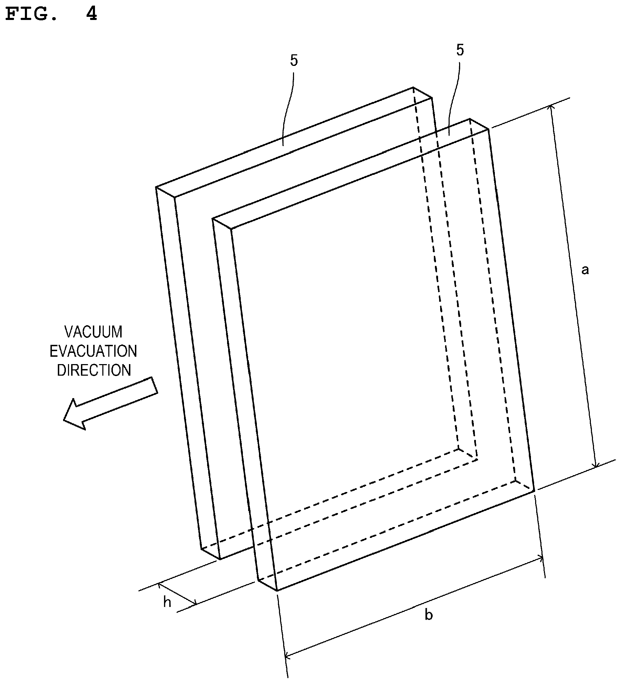

First, considering the gap between the adjacent heat generating elements 5 as a slit, a lower limit value of the interval h is acquired from a vacuum conductance. Here, it is assumed that the adjacent heat generating elements 5 form a flow path cross section (referring to a cut section perpendicular to a vacuum evacuation direction) in a rectangular shape. In this case, the interval h between the adjacent heat generating elements 5 corresponds to a short side dimension of the rectangular flow path cross section, as shown in Fig. 4. Assuming that a dimension of the heat generating element 5 in a direction along a long side of the flow path cross section is "a", and a dimension of the heat generating element 5 in the vacuum evacuation direction is "b", a vacuum conductance C in air at 20°C is expressed, using a correction coefficient Ks, as

$$C = 30.9Ks(ah^2/b) \ [cm^3/s] \ (Equation \ 1).$$

When transforming Equation 1,

$$h = \{C/(30.9Ks) \times (b/a)\}^{(1/2)} \quad \text{(Equation 2)}$$

is obtained, and a value calculated by Equation 2 becomes the lower limit value of the interval h. Note that in Equation 2, the correction coefficient Ks can be treated as "1".

The vacuum conductance C in the gap between the adjacent heat generating elements 5 is expressed, using a rated vacuum evacuation flow rate Q of the vacuum evacuation unit, and a difference $\Delta p$ between a pressure between the adjacent heat generating elements 5 and a pressure around the heat generating elements 5 during vacuum evacuation, as

$$C = Q/\Delta p \ [\text{cm}^3/\text{s}] \quad \text{(Equation 3)}.$$

$C = Q/\Delta p \ [\text{cm}^3/\text{s}]$ (Equation 3).

For example, when the dimensions a and b of the heat generating element 5 are 2.5 cm and 2.5 cm, respectively, and the rated vacuum evacuation flow rate Q of the vacuum evacuation unit is 2.79E-2 cm³·Pa/s, and the pressure between the adjacent heat generating elements 5 is 0.1 Pa, and the pressure around the heat generating element 5 during vacuum evacuation is 1E-5 Pa, the interval h acquired from Equation 2 is 0.095 cm, that is, 0.95 mm. Therefore, the lower limit value of the interval h is 0.95 mm.

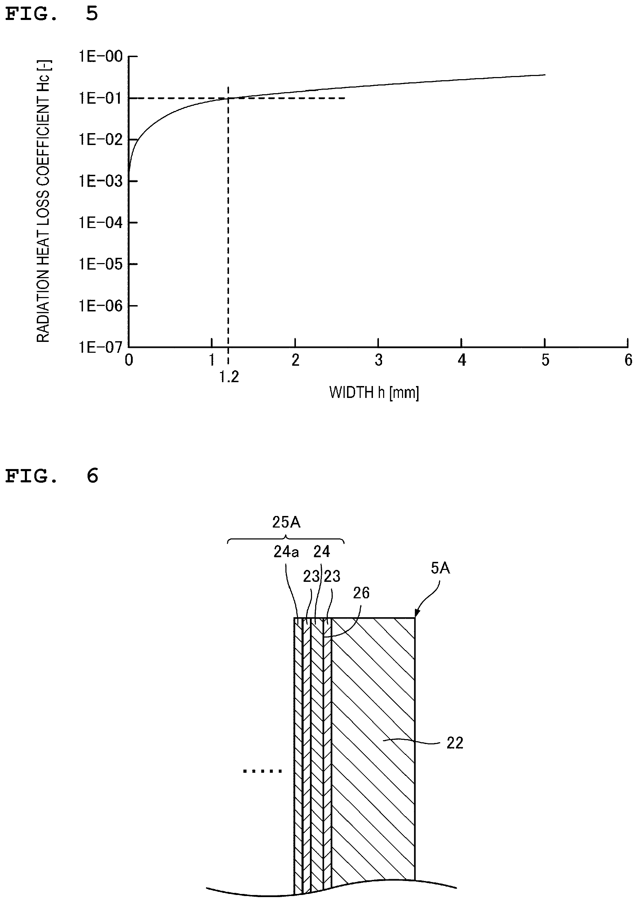

Next, considering the adjacent heat generating elements 5 as parallel flat plates with a finite width, an upper limit value of the interval h is acquired from a relation between the interval h between the adjacent heat generating elements 5 and a radiation heat loss coefficient Hc. It is known that the radiation heat loss coefficient Hc of the adjacent heat generating elements 5 becomes maximum when the dimensions a and b of the heat generating elements 5 are 2.5 cm and 2.5 cm, respectively, and in this case, there is a relation between the interval h between the adjacent heat generating elements 5 and the radiation heat loss coefficient Hc as shown in the graph shown in Fig. 5. In the graph shown in Fig. 5, a horizontal axis is the interval h between the adjacent heat generating elements 5, and a vertical axis (logarithmic axis) is the radiation heat loss coefficient Hc. Since it is known that the radiation heat loss coefficient Hc is preferably 0.1 or less, from Fig. 5, the upper limit value of the interval h between the adjacent heat generating elements 5 is 1.2 mm.

Therefore, in the present embodiment, the interval h between the adjacent heat generating elements 5 is set to a value that satisfies the following inequation.

$$\{C/(30.9Ks) \times (b/a)\}^{(1/2)} \leq h \ [\text{mm}] \leq 1.2 \quad \text{(Inequation 4)}$$

Therefore, hydrogen is supplied without hindering vacuum evacuation between the adjacent heat generating elements 5, and it becomes possible for the plurality of heat generating elements 5 to occlude a sufficient amount of hydrogen. It is also possible to reduce radiation heat loss from the heat generating surface of the heat generating element 5. Therefore, the ratio of the amount of heat generated by the heat generating element 5 to the electric power input to the heater 6 can be further improved.

A spacer 7 having a linear expansion coefficient equal to or lower than a linear expansion coefficient of the heat generating elements 5 is provided between the adjacent heat generating elements 5. Therefore, thermal stress at a contact surface between the heat generating element 5 and the spacer 7 is reduced as compared with a case where the linear expansion coefficient of the spacer 7 is larger than the linear expansion coefficient of the heat generating element 5. Therefore, damage to the heat generating element 5 at the contact surface can be prevented.

When the heat generating element 5 is made of Ni (whose linear expansion coefficient is approximately 12.8E-6/°C), examples of the material for the spacer 7 can include Ni, SUS430 (whose linear expansion coefficient is approximately 10.4E-6/°C), SUS410 (whose linear expansion coefficient is approximately 9.9E-6/°C), SUS630 (whose linear expansion coefficient is approximately 10.8E-6/°C), alumina (whose linear expansion coefficient is approximately 7.0E-6/°C), silicon carbide (whose linear expansion coefficient is approximately 4.0E-6/°C), silicon nitride (whose linear expansion coefficient is approximately 3.0E-6/°C), zirconia (whose linear expansion coefficient is approximately 10.0E-6/°C), and aluminum nitride (whose linear expansion coefficient is approximately 5.0E-6/°C). Note that SUS430, SUS410, and SUS630 are stainless steels specified by the Japanese Industrial Standards (JIS).

Ceramics such as alumina, silicon carbide, silicon nitride, zirconia, and aluminum nitride have a smaller linear expansion coefficient than metals such as Ni and alloys such as SUS430, SUS410, and SUS630, and therefore are preferable from the viewpoint of thermal stress, but ceramics are brittle as compared with metals and alloys, and may be damaged when being placed between the adjacent heat generating elements 5. For this reason, the spacer 7 is preferably made of metals or alloys.

Although the embodiments and Examples of the present invention have been described above, the present invention is not limited to the above-described embodiments and Examples, and can be appropriately modified within the scope of the gist of the present invention.

[First Modification]

In the above embodiment, an example has been described in which the heat generating element 5 includes the multilayer film 25 in which the first layer 23 and the second layer 24 are alternately stacked, but the present invention is not limited thereto, and a heat generating element 5A shown in Fig. 6 may be used. The heat generating element 5A includes a multilayer film 25A formed by stacking, in addition to the first layer 23 and the second layer 24, a third layer 24a made of a hydrogen storage metal or a hydrogen storage alloy different from the first layer 23 and the second layer 24, or a ceramic. As with the first layer 23 and the second layer 24, a thickness of the third layer 24a is preferably less than 1000 nm.

The heat generating element 5A provided with such a third layer 24a has a stacking configuration in which the first layer 23, the second layer 24, the first layer 23, and the third layer 24a are stacked in order on the base 22, and the first layer 23 is interposed between the second layer 24 and the third layer 24a, and has a configuration in which this four-layer stacking configuration is repeatedly provided. Even in such a configuration, hydrogen passes through the heterogeneous material interface between the first layer 23 and the second layer 24 and a heterogeneous material interface between the first layer 23 and the third layer 24a by quantum diffusion, so that excess heat equal to or higher than the heating temperature can be generated.

For example, it is preferable that the third layer 24a is made of one of Ni, Pd, Cu, Cr, Fe, Mg, Co, alloys thereof, SiC, CaO, $Y_2O_3$, TiC, $LaB_6$, SrO, and BaO. An alloy of the third layer 24a may be an alloy in which an additional element is added to Ni, Pd, Cu, Cr, Fe, Mg, or Co, but is particularly preferably an alloy containing two or more types of Ni, Pd, Cu, Cr, Fe, Mg, and Co. Among these, when the third layer 24a made of one of CaO, $Y_2O_3$, TiC, $LaB_6$, SrO, and BaO is provided, a storage amount of hydrogen in the heat generating element 5 increases, and the amount of hydrogen that passes through the heterogeneous material interfaces can be increased, which increases the excess heat to be obtained.

However, CaO, $Y_2O_3$, TiC, $LaB_6$, SrO, and BaO are difficult for hydrogen to pass, and therefore the third layer 24a made of one of CaO, $Y_2O_3$, TiC, $LaB_6$, SrO, and BaO preferably has a thickness of less than 1000 nm, and particularly preferably has an extremely small thickness of less than 10 nm. The third layer 24a made of one of CaO, $Y_2O_3$, TiC, $LaB_6$, SrO, and BaO may not be formed in a complete film shape but may be formed in an island shape. The first layer 23 and the third layer 24a are also continuously formed while maintaining a vacuum state, and it is preferable that a heterogeneous material interface is produced without forming a natural oxide film between the first layer 23 and the third layer 24a.

Note that the heat generating element 5A provided with such a third layer 24a may have a stacking configuration in which the second layer 24 and third layer 24a is stacked in any order, such as changing the order of the second layer 24 and the third layer 24a in Fig 6, and the first layer 23 is interposed between the second layer 24 and the third layer 24a, and also may have a configuration in which this four-layer stacking configuration is repeatedly provided. The third layer 24a may be formed for one or more layers in the heat generating element 5A.

Especially, as a combination of the first layer 23, the second layer 24, and the third layer 24a, when types of elements in the combination are expressed as "first layer 23-third layer 24a-second layer 24", it is preferably Pd-CaO-Ni, Pd-$Y_2O_3$-Ni, Pd-TiC-Ni, Pd-$LaB_6$-Ni, Ni-CaO-Cu, Ni-$Y_2O_3$-Cu, Ni-TiC-Cu, Ni-$LaB_6$-Cu, Ni-Co-Cu, Ni-CaO-Cr, Ni-$Y_2O_3$-Cr, Ni-TiC-Cr, Ni-$LaB_6$-Cr, Ni-CaO-Fe, Ni-$Y_2O_3$-Fe, Ni-TiC-Fe, Ni-$LaB_6$-Fe, Ni-Cr-Fe, Ni-CaO-Mg, Ni-$Y_2O_3$-Mg, Ni-TiC-Mg, Ni-$LaB_6$-Mg, Ni-CaO-Co, Ni-$Y_2O_3$-Co, Ni-TiC-Co, Ni-$LaB_6$-Co, Ni-CaO-SiC, Ni-$Y_2O_3$-SiC, Ni-TiC-SiC, and Ni-$LaB_6$-SiC.

[Second Modification]

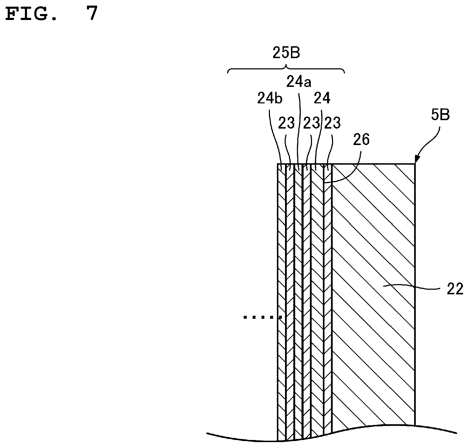

A heat generating element 5B shown in Fig. 7 may be used. The heat generating element 5B includes a multilayer film 25B formed by stacking, in addition to the first layer 23, the second layer 24, and the third layer 24a, a fourth layer 24b made of a hydrogen storage metal or a hydrogen storage alloy different from the first layer 23, the second layer 24, and the third layer 24a, or a ceramic. As with the first layer 23, the second layer 24, and the third layer 24a, a thickness of the fourth layer 24b is preferably less than 1000 nm.

For example, the fourth layer 24b may be made of one of Ni, Pd, Cu, Cr, Fe, Mg, Co, alloys thereof, SiC, CaO, $Y_2O_3$, TiC, $LaB_6$, SrO, and BaO. An alloy of the fourth layer 24b may be an alloy in which an additional element is added to Ni, Pd, Cu, Cr, Fe, Mg, or Co, but is particularly preferably an alloy containing two or more types of Ni, Pd, Cu, Cr, Fe, Mg, and Co.

It is preferable that the heat generating element 5B provided with the fourth layer 24b has a stacking configuration in which the second layer 24, the third layer 24a, and the fourth layer 24b are stacked in any order, and the first layer 23 is provided between each two of the second layer 24, the third layer 24a, and the fourth layer 24b, and has a configuration in which this six-layer stacking configuration is repeatedly provided. That is, it is preferable that the heat generating element 5B is formed by stacking in an order of the first layer 23, second layer 24, first layer 23, third layer 24a, first layer 23, and fourth layer 24b as shown in Fig. 7, or other orders (not shown) such as the first layer 23, fourth layer 24b, first layer 23, third layer 24a, first layer 23, and second layer 24. The fourth layer 24b may be formed for one or more layers in the heat generating element 5B.

Especially, as a combination of the first layer 23, the second layer 24, the third layer 24a, and the fourth layer 24b, when types of elements in the combination are expressed as "first layer 23-fourth layer 24b-third layer 24a-second layer 24", it is preferably Ni-CaO-Cr-Fe, Ni-$Y_2O_3$-Cr-Fe, Ni-TiC-Cr-Fe, and Ni-$LaB_6$-Cr-Fe.

When the fourth layer 24b made of one of CaO, $Y_2O_3$, TiC, $LaB_6$, SrO, and BaO is provided, the storage amount of hydrogen in the heat generating element 5B increases, and the amount of hydrogen that passes through the heterogeneous material interfaces can be increased, which increases the excess heat to be obtained. The fourth layer 24b made of one of CaO, $Y_2O_3$, TiC, $LaB_6$, SrO, and BaO preferably has a thickness of less than 1000 nm, and particularly preferably has an extremely small thickness of less than 10 nm. The fourth layer 24b made of one of CaO, $Y_2O_3$, TiC, $LaB_6$, SrO, and BaO may not be formed in a complete film shape but may be formed in an island shape. The first layer 23 and the fourth layer 24b are also continuously formed while maintaining a vacuum state, and it is preferable that a heterogeneous material interface is produced without forming a natural oxide film between the first layer 23 and the fourth layer 24b.

Reference Signs List

| 1 | heat generating device |
| 5, 5a, 5b | heat generating element |
| 6 | heater |
| 7 | spacer |

## Claims

1. A heat generating device, comprising:

   a pair of heaters provided with an interval therebetween; and
   a plurality of heat generating elements that are capable of occluding hydrogen and generating heat using a heat generating reaction by quantum diffusion of the hydrogen caused by heat of the pair of heaters, wherein
   the plurality of heat generating elements are arranged with an interval between each other and are arranged between the pair of heaters.

2. The heat generating device according to claim 1, further comprising:

   a vacuum evacuation unit that vacuum-evacuates gas between the adjacent heat generating elements, wherein
   the adjacent heat generating elements are provided with an interval h that satisfies the following inequality:

   $$\{C/(30.9Ks) \times (b/a)\}^{(1/2)} \leq h \, [mm] \leq 1.2,$$

   wherein
   C represents a vacuum conductance in a gap between the adjacent heat generating elements,
   Ks represents a correction coefficient,
   a represents a dimension of each of the heat generating elements in a direction along a long side of a flow path cross section, and
   b represents a dimension of each of the heat generating elements in a vacuum evacuation direction.

3. The heat generating device according to claim 1 or 2, further comprising:
   a spacer provided between the adjacent heat generating elements and having a linear expansion coefficient equal to or lower than a linear expansion coefficient of the adjacent heat generating elements.

FIG. 1

FIG. 2A

FIG. 2B

FIG. 3

FIG. 4

VACUUM
EVACUATION
DIRECTION

FIG. 5

FIG. 6

FIG. 7

## INTERNATIONAL SEARCH REPORT

| | International application No. |
|---|---|
| | **PCT/JP2022/034839** |

**A. CLASSIFICATION OF SUBJECT MATTER**

*F24V 30/00*(2018.01)i; *H05B 3/02*(2006.01)i
FI: F24V30/00 302; H05B3/02 Z

According to International Patent Classification (IPC) or to both national classification and IPC

**B. FIELDS SEARCHED**

Minimum documentation searched (classification system followed by classification symbols)

F24V30/00; H05B3/02; F28D20/00; F28F23/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/122097 A1 (CLEAN PLANET INC.) 18 June 2020 (2020-06-18) entire text, all drawings | 1-3 |
| A | JP 2019-168221 A (CLEAN PLANET INC.) 03 October 2019 (2019-10-03) entire text, all drawings | 1-3 |
| A | WO 2021/187284 A1 (MIURA KOGYO KK) 23 September 2021 (2021-09-23) entire text, all drawings | 1-3 |
| A | JP 4-55690 A (SANYO ELECTRIC CO LTD) 24 February 1992 (1992-02-24) entire text, all drawings | 1-3 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 November 2022** | **22 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/034839**

| Patent document cited in search report | | | Publication date (day/month/year) | Patent family member(s) | | | Publication date (day/month/year) |
|---|---|---|---|---|---|---|---|
| WO | 2020/122097 | A1 | 18 June 2020 | US | 2022/0026113 | A1 | |
| | | | | entire text, all drawings | | | |
| | | | | EP | 3896364 | A1 | |
| | | | | CN | 113167504 | A | |
| | | | | KR | 10-2021-0100160 | A | |
| JP | 2019-168221 | A | 03 October 2019 | US | 2020/0208885 | A1 | |
| | | | | entire text, all drawings | | | |
| | | | | EP | 3640564 | A1 | |
| | | | | KR | 10-2020-0018596 | A | |
| | | | | CN | 111094867 | A | |
| WO | 2021/187284 | A1 | 23 September 2021 | (Family: none) | | | |
| JP | 4-55690 | A | 24 February 1992 | (Family: none) | | | |

Form PCT/ISA/210 (patent family annex) (January 2015)

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019168221 A